# EUROPÄISCHE PATENTSCHRIFT

(11) **EP 1 758 698 B1**
(45) Veröffentlichungstag und Bekanntmachung des Hinweises auf die Patenterteilung: **17.12.2008**
(21) Anmeldenummer: 04724565.9
(22) Anmeldetag: 31.03.2004
(51) Int. Cl.: B21D 47/01, B21D 22/20, B60R 19/18

(54) **VERFAHREN UND VORRICHTUNG ZUM BLECHFORMEN UND HÄRTEN**
METHOD AND DEVICE FOR SHAPING AND HARDENING A METAL SHEET
PROCEDE ET DISPOSITIF POUR LE FORMAGE ET LE DURCISSEMENT D'UNE FEUILLE METALLIQUE

(43) Veröffentlichungstag der Anmeldung: 07.03.2007
(73) Patentinhaber: Brummelte & Lienen Werkzeugbau GmbH, 33104 Paderborn (DE)
(72) Erfinder: BRUMMELTE, Udo, 33104 Paderborn (DE)
(74) Vertreter: Hanewinkel, Lorenz
(86) Internationale Anmeldenummer: PCT/EP2004/003371
(87) Internationale Veröffentlichungsnummer: WO 2005/105336

(56) Entgegenhaltungen:
- DE-C- 10 149 221
- US-A- 4 010 969
- US-A1- 2003 131 646
- US-B1- 6 293 134
- US-B1- 6 474 126

## Beschreibung

Die Erfmdung betrifft ein Verfahren und eine Vorrichtung zum Verformen von einem Blechzuschnitt aus härterem Stahl in einem Ziehpresswerkzeug, wobei ein Werkstück mit im wesentlichen U-förmigen Querschnitt und ggf. mit einer Einprägung und/oder Sicke in dessen Grundbereich erzeugt wird, und zum Härten und/oder Vergüten durch ein Glühen und ein nachfolgendes Abschrecken in einer Form. Ein verfahren sowie eine Vorrichtung gemäß den Oberbegriffen der Ansprüche 1 bzw. 11 ist z.B. aus US 6 293 134 B bekannt.

Es ist bekannt, derartig geformte Werkstücke aus gehärtetem Stahl als Mittelträger oder Stoßfänger in Kraftfahrzeugen zu verwenden, da sie eine dreifach höhere Festigkeit als üblicher hochwertiger Stahl aufweisen. Die bisher übliche Formgebung findet im kalten Zustand des Bleches statt. Das Werkzeug besteht aus einem Stempel, der der Innenausformung des U-Querschnitts dient, einem diesen umgebenden Blechhalter und einer Ziehmatrize, die komplementär zum Stempel und dem Blechhalter ausgebildet ist. Die Ziehmatrize enthält in ihrem Grund die Prägeform und der Stempel das Pendant dazu. Beim Ziehvorgang wird das Blech randseitig mit dem Blechhalter mit einem Gegendruck gegen die Matrize gedrückt, solange die Matrize sich über den Stempel bewegt, wobei der Blechhalter in Führungen gleitend mit der Matrize mitläuft und das Blech nach und nach aus dieser Einspannung herausgezogen wird. Hierbei wird das Blech an den äußeren Kanten der Matrize beim Austritt aus dem Gegenhalter fortlaufend gekrümmt und anschließend wieder geglättet, was an der Matrize einen erheblichen Kantenverschluss erbringt, hohe Ziehenergie verbraucht und das Blechgefüge durch einseitige Überdehnung und anschließende Stauchung stark verzerrt und zu Riss- und Faltenbildung führen kann. Wenn eine heiße Platine in ein normales Formwerkzeug mit Blechhaltern eingebracht wird, kühlt sich das Blech vorzeitig ab und ist damit nicht mehr ziehfähig. Das Blech reißt und neigt sehr stark zur Faltenbildung. Bei Werkstücken mit engen Radien der Kontur und bei asymmetrischer Form sowie großem Längen/Seitenverhältnis genügt auch eine einfache Abstützung nicht, um ein gleichmäßiges Einlaufen der Platine in die Formvertriefung sicherzustellen.

Wenn die U-Form im Wesentlichen fertig ist, beginnt der Prägevorgang, bei dem das im Grundbereich der U-Form befindliche Material gedehnt und dadurch in seiner Dicke reduziert wird. Nach dem Öffnen der Presse werden die sperrigen Ziehteile in einem Glühofen aufgeheizt und von diesem aus in ein Abkühlwerkzeug zum Abschrecken verbracht, das aus einem gekühlten Stempel und einer gekühlten Matrize besteht, die der Innen- bzw. Außenform des fertigen Werkstückes gemäß geformt sind.

Es ist Aufgabe der Erfindung, die Vorrichtung und das Verfahren zur Herstellung der gehärteten und gezogenen und geprägten Werkstücke, auch mit stark gekrümmten und/oder lang gestreckten Formen, zu vereinfachen, die Standfestigkeit der Vorrichtung zu verbessern und qualitativ bessere Werkstücke damit herzustellen.

Die Lösung besteht darin, dass der Blechzuschnitt glühend erhitzt in das geöffnete Ziehpresswerkzeug eingebracht wird und dort randseitig seitlich sowie frontseitig zu einem Tiefziehbereich der Matrize beabstandet gegen eine Tiefziehkraft freiliegend abstützend gehalten wird, so dass der Blechzuschnitt randseitig leicht abgefühlt durch die Tiefziehkraft auf die Matrize zu zuerst eingebeult sich zur Matrize hin wölbt, und danach in die Matrize hineingedrückt wird und dann die entstandene Blechwölbung gestaucht und geprägt wird, und dann das Werkstück in dem Ziehpresswerkzeug abgekühlt wird.

Vorteilhafte Ausgestaltungen sind in den Unteransprüchen angegeben. Ein geeignetes Werkzeug ist in Nebenansprüchen angegeben.

Vorzugsweise wird die Tiefziehkraft von einem Stempel aufgebracht. Es kann jedoch auch ein Unterdruck in der Matrize genutzt werden.

Das Verfahren benötigt somit zu seiner Durchführung nur einen Glühofen und ein einziges zweiteiliges Werkzeug, in dem das Ziehen der Werkstückflanken, das Prägen des Werkstückgrundes und bedarfsweise auch der Flanken, also die gesamte Formgebung und da Abkühlen, also das Härten, erfolgt. Es entfällt somit ein vollständiges Werkzeug mit einem beweglichen Niederhalter, sowie die Schritte der Beschickung und Entnahme daraus. Auch ist die Raumausnutzung und Beschickung des Glühofens wesentlich verbessert, da ebene Blechplatinen dort aufgeheizt werden anstatt räumlich sperriger Werkstücke.

Das glühende Material lässt sich leichter verformen. Durch die vom Rand des Blechzuschnittes beginnende Abkühlung wird ein Beulvorgang eingeleitet, der die Tiefziehverformung unterstützt. Da der Rand des Bleches nur matrizenseitig gegen den Stempel abgestützt und nicht eingeklemmt ist, entfällt eine Hin- und Rückkrümmung des Bleches, so dass die Entstehung von Rissen und Falte im Blech vermieden wird und die Kanten des statischen Randhalters sich kaum abnutzen und keine Riefen darin entstehen, die wiederum im Blech unerwünschte Riefen erzeugen würden. Es ist vorteilhaft, dass beim Einfahren des Stempels in die Matrize Randbereiche des Blechzuschnitts um Auflager herum gewölbt werden und daran der glühende Blechzuschnitt im Ziehpresswerkzeug einen seitlichen Rückhalt erhält während die Randbereiche des Blechzuschnitts über diese Auflager in die Matrize nachgezogen werden.

Da sich das Blech beim Eindrücken in die Matrize durch seine Spannung vor dem Stempel aufwölbt, besteht vor dem Prägen dort ein nützlicher Materialüberschuss, der den geprägten Grund des Werkstückes durch Stauchung verstärkt.

Vorteilhaft kann der Zuschnitt des Bleches mit einem randseitigen Überstand über das U-Profil hinaus versehen sein, der zwischen einem Randbereich des Stempels und der den U-Bereich umgebenden Matrizenbereich seitlich als Kragen ausgeformt wird.

Der U-Querschnitt kann bevorzugt, wie bei den bekannten Werkstücken, die in der Kfz-Technik Verwendung finden, in der Erstreckungsrichtung des Werkstückes unterschiedlich tief, unterschiedlich weit, gerundet und/oder mit trapezförmigen, seitlich divergierenden Flanken ausgebildet sein. Auch eine endseitige Verflachung, Aufstellung oder Nuteinprägung des Werkstückes ist durch entsprechende Gestaltung der Matrize und des Stempels ohne weiteres im gleichen Schritt herstellbar. Ausnehmungen, die beispielsweise zur späteren Befestigung dienen, werden bevorzugt in die Blechplatine eingebracht. Sie können aber in Sonderfällen auch in das gehärtete Werkstück mit einem Laser ausgeschnitten werden. Gesamtwirtschaftlich gesehen sinken die Herstellkosten der gehärteten Werkstücke auf ca. 30 % der bisherigen.

Vorzugsweise wird die Matrize unten und der Stempel oben in der Presse angeordnet. Als Randauflagen für den Blechzuschnitt dienen auswechselbare Einsätze, die beabstandet den Ziehbereich der Matrize umgeben und überragen. Die Kanten der Randauflagen, über die das glühende Blech gezogen wird, sind vorzugsweise abgerundet, so dass der Verschleiß minimiert ist. Zweckmäßig wird die Randauflage aus einem gegenüber dem Blech weicheren Opfermetall, z.B. Kupfer oder Messing, hergestellt, wodurch der Ziehvorgang erleichtert und das Blech geschont wird.

Es ist in alternativer Ausführung auch vorgesehen, erst nach einem ersten Eindrücken durch den zentralen Stempel die Randwölbung mittels der Niederhalter vorzunehmen. Weiterhin ist es alternativ zur dargestellten Version vorgesehen, die Niederhalter zwischen dem Stempel und dem matrixseitigen Auflager anzuordnen, so dass die Auswölbung um die Niederhalter ausgebildet wird und dort der Seitenhalt entsteht.
Grundsätzlich ist ein seitlicher Abstand zwischen dem Auflager und dem wölbenden Niederhalter einzuhalten, damit die glühende Platine nur linienförmige Auflagen dort hat und der Rand nicht abkühlt und nicht eingeklemmt wird, so dass er relativ leicht nachgezogen wird, wenn der Stempel tiefer in das Werkzeug einfährt.

In dem Presswerkzeug sind in Stempel und Matrize die Formen des fertigen Werkstücks eingearbeitet. Zusammen erzeugen sie durch Pressen das fertige Werkstück. Es ist ein Werkstückrandbereich in das Werkzeug eingearbeitet, in dem das Werkstück nach dem Pressen geschnitten wird. Entsprechend der äußeren Kontur des Werkstücks sind um den Matrizenbereich im Werkzeugunterteil Platinenauflager angeordnet, auf die vor dem Pressen die glühende Blechplatine gelegt wird. Diese Platinenauflager sind so angeordnet, dass die Blechplatine in Bereichen aufliegt, die später nicht zum fertigen Werkstück gehören. Damit werden Unregelmäßigkeiten von den Platinenauflagern nicht im fertigen Werkstück sichtbar. Im Stempel sind randseitig Niederhalter angebracht, die abgerundet sind. Die Niederhalter sind so angeordnet, dass sie außerhalb oder innerhalb der unteren Auflager die glühende Blechplatine treffen und somit den Rand der Blechplatine um die unteren Platinenauflager bzw. die Niederhalter wölben. Damit wird die Blechplatine dort beim weiteren Pressvorgang seitlich gehalten. Beim vollständigen Einfahren des Stempels wird der Werkstückrandbereich wieder aufgewölbt und nach und nach in die Matrize nachgezogen.
Durch das seitliche Festhalten auf den Auflagern entstehen beim Pressen keine Doppelungen, Falten oder Risse in der Blechplatine. Die Blechplatine hat im Bereich des fertigen Werkstücks beim Pressen erst spät Kontakt mit dem Werkzeug und seinen Radien. Dies bedeutet wenig Werkzeugverschleiß und vermeidet Ziehriefen.
Die Auflager sind vorteilhaft dort im Werkzeug angebracht, wo ein kontrolliertes Nachziehen des Materials beim Pressen erreicht werden soll. Die randseitigen Niederhalter sind zusätzlich an den Stellen des Stempels angebracht, wo ein zusätzlicher Rückhalt des Materials des Blechzuschnitts erforderlich ist, um Doppelungen und Falten zu vermeiden.

Vorteilhafterweise besitzen die Auflager und die Niederhalter stirnseitig abgerundete Kanten, um die sich die glühende Platine legen kann, damit ein kontrolliertes Nachziehen des Materials beim Pressen erreicht wird. Die randseitigen Niederhalter sind zusätzlich an den Stellen des Stempels angebracht, wo ein zusätzlicher Rückhalt des Materials des Blechzuschnitts erforderlich ist, um Doppelungen und Falten zu vermeiden.

Vorteilhafterweise besitzen die Auflager und die Niederhalter stirnseitig abgerundete Kanten, um die sich die glühende Blechplatine einfach herum wölben lässt.

Die Auflager sind besonderem Verschleiß ausgesetzt, da die glühende Blechplatine um die runden Kanten gezogen wird. Die Auflager liegen aber außerhalb des fertigen Werkstücks. Daher ist es günstig, diese Auflager als auswechselbare Einsätze zu gestalten. Nach dem Auftreten von Verschleißerscheinungen sind sie einfach auszuwechseln. An dem fertigen Werkstück ändert sich dadurch nichts.

Zum Ausgleich von Toleranzen des Materials und zur Optimierung des Pressvorgangs sind die auswechselbaren Auflager verschiebbar, drehbar und höhenverstellbar am Werkzeugunterteil angebracht und in der jeweiligen Einstellung zu fixieren.

Eine weitere Optimierung des Pressvorgangs wird erreicht, wenn die Niederhalter und/oder die Auflager während des Niederfahrens des Stempels in der Höhe verändert werden. Dazu werden die Niederhalter und/oder Auflager durch Pinolen in der Höhe gesteuert. Dabei kann die Höheneinstellung dem Niederfahren des Stempels vor- oder nachlaufen.

Die Niederhalter sind dort angebracht, wo ein besonderer Rückhalt des glühenden Materials der Blechplatine erforderlich ist. Dies ist besonders an seitlich engen Rundungen des Werkzeugs und der Werkzeugkontur der Fall. Die Niederhalter drücken dort die Blechplatine hinter die Auflager und erzeugen so den gewünschten Rückhalt.

Ein besonderer Rückhalt des Materials der Blechplatine ist auch an den Seiten und Enden eines langen Werkstücks vorteilhaft. Somit ist es vorteilhaft, auch an diesen Stellen im Stempel Niederhalter anzuordnen, welche die Blechplatine um die Auflager wölbende Blechplatine einfach herum wölben lässt.

Die Auflager sind besonderem Verschleiß ausgesetzt, da die glühende Blechplatine um die runden Kanten gezogen wird. Die Auflager liegen aber außerhalb des fertigen Werkstücks. Daher ist es günstig, diese Auflager als auswechselbare Einsätze zu gestalten. Nach dem Auftreten von Verschleißerscheinungen sind sie einfach auszuwechseln. An dem fertigen Werkstück ändert sich dadurch nichts.

Zum Ausgleich von Toleranzen des Materials und zur Optimierung des Pressvorgangs sind die auswechselbaren Auflager verschiebbar, drehbar und höhenverstellbar am Werkzeugunterteil angebracht und in der jeweiligen Einstellung zu fixieren.

Eine weitere Optimierung des Pressvorgangs wird erreicht, wenn die Niederhalter und/oder die Auflager während des Niederfahrens des Stempels in der Höhe verändert werden. Dazu werden die Niederhalter und/oder Auflager durch Pinolen in der Höhe gesteuert. Dabei kann die Höheneinstellung dem Niederfahren des Stempels vor- oder nachlaufen.

Die Niederhalter sind dort angebracht, wo ein besonderer Rückhalt des glühenden Materials der Blechplatine erforderlich ist. Dies ist besonders an seitlich engen Rundungen des Werkzeugs und der Werkzeugkontur der Fall. Die Niederhalter drücken dort die Blechplatine hinter die Auflager und erzeugen so den gewünschten Rückhalt.

Ein besonderer Rückhalt des Materials der Blechplatine ist auch an den Seiten und Enden eines langen Werkstücks vorteilhaft. Somit ist es vorteilhaft, auch an diesen Stellen im Stempel Niederhalter anzuordnen, welche die Blechplatine um die Auflager wölben

Vorteilhafte Ausgestaltungen sind in den Fig. 1 - 6 dargestellt.
Fig. 1 zeigt einen Werkzeugquerschnitt nach Einführung der Blechplatine;
Fig. 2 zeigt den Werkzeugquerschnitt nach dem Einbeulen der Platine,
Fig. 3 zeigt den Querschnitt des Werkzeugs nach dem Ziehen und Prägen beim Abkühlen des Werkstückes.
Fig. 4 zeigt schematisch einen Querschnitt durch das Werkzeug mit gewölbter Blechplatine.
Fig. 5 zeigt in einer perspektivischen Ansicht die Position der Auflager im Werkzeug.
Fig. 6 zeigt einen Schnitt durch das Werkzeug entlang der Linie S

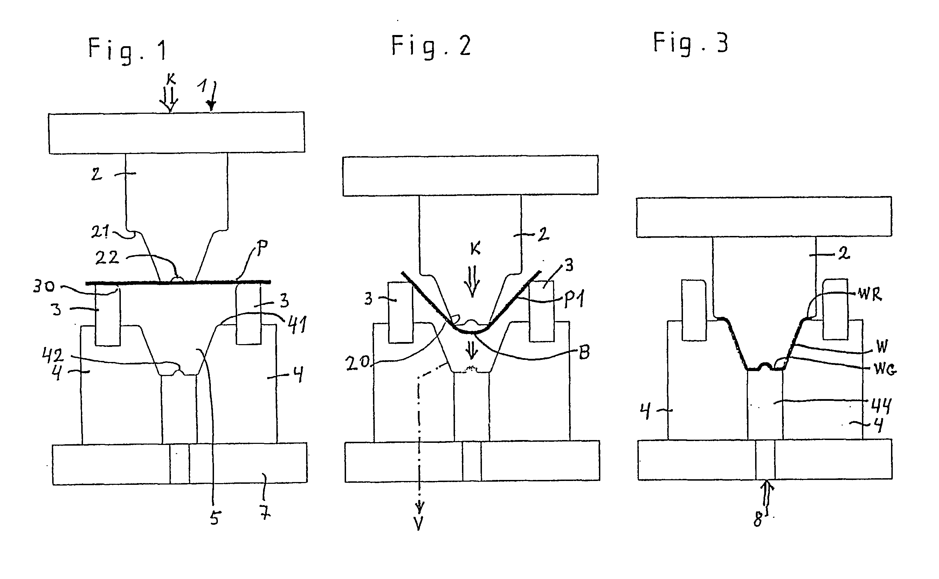

Fig. 1 zeigt das Zieh-Prägewerkzeug 1 zwischen dessen Stempel 2 und Platinenauflager 3, das in der Matrize 4, den Tiefziehbereich 5 umgebend und diesem gegenüber stehend angeordnet ist, eine glühende Blechplatine P eingelegt und randseitig gehalten ist. Das Platinenauflager 3 ist wie das ganze Werkzeug 2, 4 gekühlt, so daß das Blech an seinen Berührungsbereichen bereits abgekühlt wird.

Fig. 2 zeigt den Zustand des Werkzeuges nach einer Teilabsenkung des Stempels 2, wodurch die Platine P1 eingebeult vorgeformt ist. Sie erstreckt sich seitlich von den Kanten 30 des Platinenauflagers 3 und über die Frontkanten 20 des Stempels 2, vor dem sich eine Beule B ausbildet.

Fig. 3 zeigt den geschlossenen Werkzeugzustand, in dem das auf der Platine gezogene und geprägte Werkstück W seine endgültige Form zwischen dem Stempel 2 und dem Tiefziehbereich 5 der Matrize 4 erhalten hat und durch Abkühlen gehärtet wird.

Die durchgebogene Platine P1 hat randseitig zwischen den Ziehphasen in Fig. 2 und 3 das Platinenauflager 3 verlassen und ist in der Endphase des Ziehens und Pressens zwischen einem sich seitlich erstreckenden Stempelrand 21 und der dazu parallelen Matrizenoberfläche 41 als verstärkender Randbereich von dem trapezförmigen U-Profil des Werkstückes W seitlich abgebogen.

Im Grundbereich WG des Werkstückes W ist eine Einprägung durch einen dortigen Vorsprung 42 in der Matrize 4 und eine dazu komplementäre Nut 22 im Stempel 2 erzeugt, indem die Beule B, Fig. 2, dort hinein zusammengestaucht worden ist.

Vorzugsweise ist in der Matrize 4 am Grundbereich WG ein Auswerfer 44 vertikal verschieblich angeordnet, der unten auf einer Grundplatte 7 beim Zieh- und Pressvorgang abgestützt ruht und nach dem Abkühlen des Werkstückes W mit einem Hubmittel 8 angehoben wird.

Der dargestellte Form- bzw. Werkstückquerschnitt ist beispielhaft. Da die Verformung im warmen Zustand des Bleches erfolgt, können auch andere Formen, z.B. mit steileren Flanken, erzeugt werden, als bei der Kaltpresstechnik bisher ohne Materialzerstörung möglich waren. Insbesondere lassen sich auch Kästen und Wannen sowie mehrdimensional gekrümmte Bauteile mit der neuartigen Technologie herstellen.

Wegen der enormen Kostensenkung lassen sich ganz neue Anwendungsgebiete für die leichten, höchstfesten gehärteten Stahlblechbauteile erschließen, was insbesondere für die Herstellung Brennstoff sparender Kraftfahrzeuge von Bedeutung ist. Solche warmgeformte Strukturteile sind beispielsweise Türaufprallträger, Stoßfänger, A-Säulen, B-Säulen, Dachrahmen, Tunnel, Stirnwand, Seitenteile, Schwellen, um nur einige zu nennen.

Auf dem Platinenauflager 3 erfolgt durch die Tiefziehkraft K eine weitgehende Vorverformung und erst in der letzten Phase des Pressens erfolgt eine Endformung in der Matrize 4, so daß eine Abkühlung erst danach eintritt.

Es ist in einer Variante des Verfahrens auch möglich, statt mit einem Stempel 2 oder zusätzlich dazu durch Unterdruck V die Platine P, P1 in die Matrize hineinzuziehen. Insbesondere das Vorformen bei der Auflage auf dem Platinenauflager 3 kann durch Vakuumbeaufschlagung erfolgen, wobei das Platinenzentrum solange noch nicht mit dem kalten Stempel 2 in Berührung kommt.

Da die meisten Strukturbleche in der Seitenansicht, also quer zu den Figurenansichten, unterschiedliche Höhen haben, d.h. wenn der Stempelboden und die Flanschfläche unterschiedliche Höhen aufweisen, gibt man dementsprechend dem Auflager 3 die gleiche Höhenprofilierung, wie der Stempelboden hat, damit sich das warme Blech gleichzeitig und gleichmäßig um den Stempel legen kann und so Blechdoppelungen vermieden werden.

Das Opfermetall des Auflagers 3 hat einen möglichst großen materialschonenden Radius an seiner Kante 30 zur Werkzeugmitte hin und kann aus dem Vollen gefräst werden. Es kann als Austauschsegmente aufgeteilt, aufgeschraubt oder in eine Nut locker eingesetzt werden. Das Opfermaterial kann gehärteter Stahl, Messing, Rotguss, Ampco oder ähnliches Material sein.

Durch die Anwendung des neuen Verfahrens entsteht ein tiefgezogenes und gehärtetes Werkstück W aus Stahl, mit etwa U-förmigem Querschnitt, dessen seitliche Flanken keine merklichen Ziehriefen und keine Materialschwächung aufweisen und dessen Grundbereich WG eine Materialverdickung und -verdichtung oder dessen verdickter und verdichteter Grundbereich WG eine Prägung aufweist.

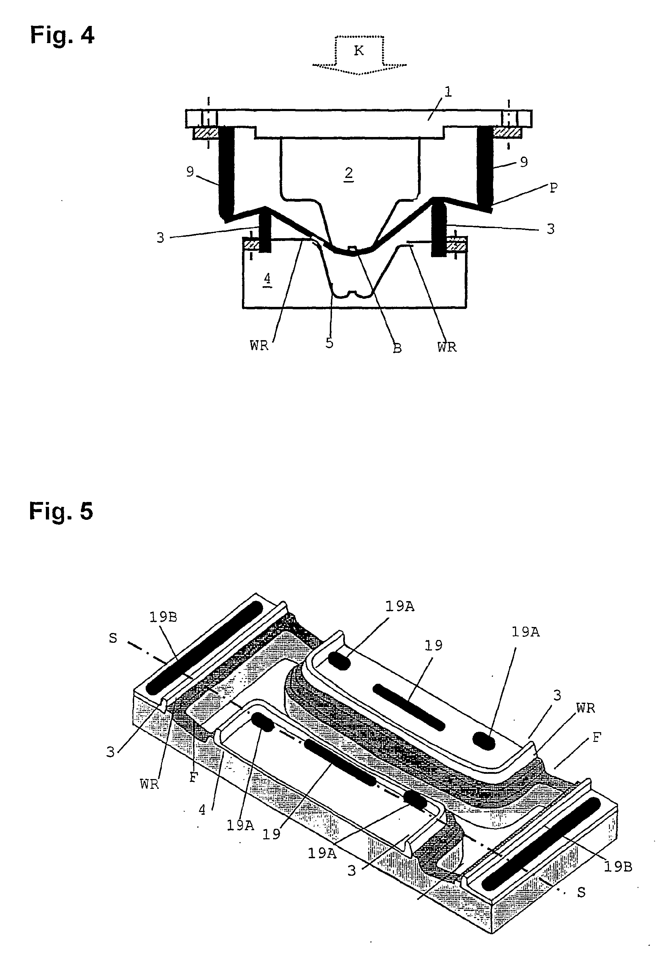

In Fig. 4 ist schematisch dargestellt, wie im Werkzeug 1 der Stempel 2 in die Matrize 4 einfährt. Die glühende Blechplatine P hat auf Auflagern 3 gelegen. Die Niederhalter 9 wölben die Platine um die Auflager 3 und fixieren sie damit. Die Positionen der Auflager 3 an der Matrize 4 und der Niederhalter 9 am Stempel 2 sind zur Optimierung des Pressverfahrens in der Lage und in der Höhe veränderbar.
Mit der Tiefziehkraft K wird das Werkstück in den Tiefziehbereich 5 hineingedrückt, wobei sich eine Blechwölbung B bildet. Im Werkstückrandbereich WR wird in einem späteren Arbeitsgang das Werkstück beschnitten. Damit sind Spuren der Auflager im fertigen Werkstück nicht vorhanden.

Fig. 5 zeigt eine perspektivische Draufsicht auf die Matrize 4. Als Beispiel ist hier eine Werkstücksform F eines Doppel-T-Holms für ein Kraftfahrzeug dargestellt. In die Matrize 4 ist die Form F für das Werkstück eingearbeitet. Dabei ist an der äußeren Kontur ein Werkstückrandbereich WR berücksichtigt, in dem das Werkstück später beschnitten wird. Um die äußere Kontur der Werkstücksform F sind die Auflager 3 angeordnet, die auswechselbar sind und unterschiedliche Höhen besitzen können. Die Flächen 19, 19A, 19B bezeichnen geeignete Positionen, an denen die Niederhalter die Blechplatine um die Auflager 3 wölben können. Damit werden die kritischen Stellen beim Pressen des Werkstücks W optimiert.

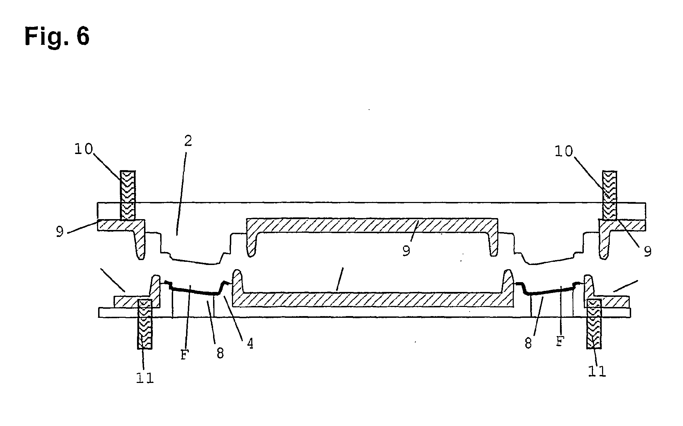

Die Fig. 6 zeigt einen Schnitt durch das Werkzeug entsprechend der Linie S in Fig. 2, nach außen gesehen.

In der Matrize 4 ist die Werkstückform F eingearbeitet. In dieser Darstellung sind auch die Hubmittel 8 eingezeichnet, die in Fig. 2 fehlen. Die Werkstückform F ist von den Platinenauflagern 3 umgeben. In den Stempel 2 ist die entsprechende Form eingearbeitet. An den vorgesehen Positionen sind die Niederhalter 9 am Stempel angebracht. Die Niederhalter 9 können auch in ihrer Höhe durch die Pinolen 10 beim Niederfahren des Stempels 2, gesteuert durch die nicht dargestellte Oberluft, verändert werden. Damit ist ein Vor- oder Nachlaufen der Niederhalter 9 gegenüber dem Stempel zur Optimierung realisierbar.
Auf gleiche Weise kann auch die Höhe der Platinenauflager 3 während des Pressvorgangs durch die Pinolen 11 gesteuert werden.
Damit kann insgesamt der Pressvorgang durch die Bestimmung der Lage und Höhe der Auflager 3 und der Niederhalter 9 sowie durch ein eventuell erforderliches Vor- oder Nachlaufen der Auflager 3 oder der Niederhalter 9 zum Niederfahren des Stempels 2 optimiert werden.

### Bezugszeichenliste

- 1: Zieh-Prägewerkzeug (Umformwerkzeug)
- 2: Stempel
- 3: Platinenauflager
- 4: Matrize
- 5: Tiefziehbereich von 4
- 7: Grundplatte
- 8: Hubmittel
- 9: Niederhalter
- 10: Pinole im Stempel
- 11: Pinole in der Matrize
- 19: Positionen für Niederhalter
- 19A: Positionen für Niederhalter
- 19B: Positionen für Niederhalter
- 20: Kante an 2
- 21: Stempelrand
- 22: Prägenut
- 3 0: Ziehkante an 3
- 41: Matrizenrand
- 42: Prägevorsprung
- 44: Auswerfer
- P: Platine warm (Blechzuschnitt)
- P 1: Platine vorgeformt
- B: Beule von P 1 vor 2
- F: Werkstückform
- K: Tiefziehkraft
- W: Werkstück
- WG: Werkstückgrundbereich
- WR: Werkstückrandbereich
- V: Vakuum

## Patentansprüche

1. Verfahren zum Verformen von einem Blechzuschnitt (P) aus härterem Stahl in einem Ziehpresswerkzeug (2, 4), wobei ein Werkstück (W) mit im wesentlichen U-förmigen Querschnitt und ggf. mit einer Einprägung und/oder Sicke in dessen Grundbereich (WG) erzeugt wird, und zum Härten und/oder Vergüten durch ein Glühen und ein nachfolgendes Abschrecken in einer Form, **dadurch gekennzeichnet, dass** der der Blechzuschnitt (P) glühend erhitzt in das geöffnete Ziehpresswerkzeug (2, 4) eingebracht wird und dort randseitig seitlich sowie frontseitig zu einem Tiefziehbereich (5) der Matrize (4) beabstandet gegen eine Tiefziehkraft (K) freiliegend abstützend gehalten wird, so dass der Blechzuschnitt (P) randseitig leicht abgekühlt durch die Tiefziehkraft (K) auf die Matrize (4) zu zuerst eingebeult sich zur Matrize (4) hin wölbt, und danach in die Matrize (4) hineingedrückt wird und dann die entstandene Blechwölbung (B) gestaucht und geprägt wird, und dann das Werkstück (W) in dem Ziehpresswerkzeug (2, 4) abgekühlt wird.

2. Verfahren nach Anspruch 1, **dadurch gekennzeichnet, dass** die Tiefziehkraft (K) durch einen Stempel (2) aufgebracht wird.

3. Verfahren nach Anspruch 1, **dadurch gekennzeichnet, dass** die Tiefziehkraft (K) zumindest zeitweilig oder teilweise durch ein matrizenseitiges Vakuum (V) aufgebracht wird.

4. Verfahren nach Anspruch 1, **dadurch gekennzeichnet, dass** das Werkstück (W) nach dem Härten mit einem Auswerfer (44) aus der Matrize (4) herausgedrückt wird, der während der Einwirkung der Tiefziehkraft (K) auf einer Grundplatte (7), die die Matrize (4) trägt, abgestützt ist.

5. Verfahren nach Anspruch 2, **dadurch gekennzeichnet, dass** der Stempel (2) mindestens eine Prägenut (22) über einen dazu passenden Prägevorsprung (42) der Matrize (4) drückt.

6. Verfahren nach Anspruch 2, **dadurch gekennzeichnet, dass** ein Werkstückrandbereich (WR) zwischen einem sich seitlich erstreckenden Stempelrand (21) und einem dazu parallelen Matrizenrand (41) beim Prägen von dem U-förmigen Querschnitt des Werkstückes (W) abgewinkelt wird.

7. Verfahren nach Anspruch 1, **dadurch gekennzeichnet, dass** der Blechzuschnitt (P) über eine abgerundete Kante (30) des Platinenauflagers (3) in die gewölbte Form (P1) vorgezogen wird.

8. Verfahren nach Anspruch 1, **dadurch gekennzeichnet, dass** beim Einfahren des Stempels (2) in die Matrize (4) der Rand des Blechzuschnitts (P) um die Auflager (3) herumgewölbt werden und daran der glühende Blechzuschnitt (P) im Ziehpresswerkzeug (2,4) einen Rückhalt erhält während Randbereiche des Blechzuschnitts (P) über die Auflager (3) in die Matrize (4) nachgezogen werden.

9. Verfahren nach Anspruch 8, **dadurch gekennzeichnet, dass** das Platinenauflager (3) mit seiner Auflagerfläche jeweils annähernd gleich beabstandet zu einem Boden des Tiefziehbereiches (5) ausgebildet ist.

10. Verfahren nach Anspruch 1, **dadurch gekennzeichnet, dass** der U-förmige Querschnitt des Werkzeuges (2, 4) unterschiedlich weit, tief und/oder profiliert ausgebildet ist.

11. Werkzeug zum Ziehen und Prägen von härtbarem Stahl mit einer Matrize (4) mit einem etwa U-förmig im Querschnitt ausgebildeten Tiefziehbereich (5) und einem Auflager für einen Blechzuschnitt (P), den eine Tiefziehkraft (K) in den Tiefziehbereich (5) drückt, insbesondere zur Durchführung des Verfahrens nach Anspruch 1, **dadurch gekennzeichnet, dass** das Werkzeug (W) zwecks Abkühlung und Härtung des jeweils glühend eingebrachten Blechzuschnittes (P) gekühlt ist und der Tiefziehbereich (5) von einem Platinenauflager (3) seitlich und frontseitig beabstandet umgeben ist, so dass der Blechzuschnitt (P) in den Tiefziehbereich (5) hinein ausbeulend vorgeformt annähernd dessen Querschnitt erhält, bevor er diesen sich abkühlend berührt.

12. Werkzeug nach Anspruch 11, **dadurch gekennzeichnet, dass** koaxial zur Matrize (4) ein zu dieser passender Stempel (2) verschieblich angeordnet ist, der die Tiefziehkraft (K) zumindest teilweise aufbringt.

13. Werkzeug nach Anspruch 11, **dadurch gekennzeichnet, dass** der Tiefziehbereich (5) steuerbar mit einem Vakuum (V) verbindbar ist, das zumindest teilweise die Tiefziehkraft (K) erbringt.

14. Werkzeug nach Anspruch 11, **dadurch gekennzeichnet, dass** der U-förmige Querschnitt des Tiefziehbereiches (5) annähernd trapezförmig mit divergierenden Flanken ausgebildet ist.

15. Werkzeug nach Anspruch 11, **dadurch gekennzeichnet, dass** der Stempel (2) seitlich und/oder frontseitig mindestens eine Prägenut (22) und der Tiefziehbereich dazu jeweils einen Prägevorsprung (42) aufweisen.

16. Werkzeug nach Anspruch 11, **dadurch gekennzeichnet, dass** der Stempel (2) seitlich beabstandet zu den Platinenauflagern (3) mindestens einen stirnseitig abgerundeten Niederhalter (9) aufweist, der beim Einfahren des Stempels (2) in die Matrize (4) den dort befindlichen Randbereich des Blechzuschnitts (P) beim Einfahren um das Auflager (3) wölbt, wonach er um diese in die Matrize (4) nachgezogen wird.

17. Werkzeug nach Anspruch 16, **dadurch gekennzeichnet, dass** die Auflager (3) und die Niederhalter (9) jeweils dort im Werkzeug eingebaut sind, wo ein Rückhalt des Blechzuschnitts (P) erforderlich ist.

18. Werkzeug nach Anspruch 16, **dadurch gekennzeichnet, dass** die Auflager (3) und die Niederhalter (9) jeweils stirnseitig abgerundet sind.

19. Werkzeug nach Anspruch 16, **dadurch gekennzeichnet, dass** die Auflager (3) und die Niederhalter (9) zur Optimierung des Verfahrens nach Anspruch 1 in der Position und/oder in der Höhe festgelegt sind.

20. Werkzeug nach Anspruch 19, **dadurch gekennzeichnet, dass** die Auflager (3) und/oder die Niederhalter (9), dem Niederfahren des Stempels (2) vor- oder nachlaufend, in der Höhe verändert werden.

21. Werkzeug nach Anspruch 16, **dadurch gekennzeichnet, dass** die Niederhalter (9, 19A) jeweils dort benachbart zu den Auflagern (3) angeordnet sind, wo das Werkzeug (2, 4) seitlich enge Rundungen aufweist.

22. Werkzeug nach Anspruch 16, **dadurch gekennzeichnet, dass** die Niederhalter (9, 19B) jeweils endseitig eines langen Werkzeugs (2, 4) angeordnet sind.

23. Werkzeug nach Anspruch 11, **dadurch gekennzeichnet, dass** der Stempel (2) einen seitlichen Stempelrand (21) und die Matrize (4) dazu parallel einen Matrizenrand (41) zum Pressen eines seitlichen Werkstückrandbereiches (WR) aufweisen.

24. Werkzeug nach Anspruch 11, **dadurch gekennzeichnet, dass** in dem Tiefziehbereich (5) bodenseitig ein Auswerfer (44) angeordnet ist, der mit einem Hubmittel (8) in Wirkverbindung steht.

25. Werkzeug nach Anspruch 11, **dadurch gekennzeichnet, dass** das Platinenauflager (3) lösbar in der Matrize (4) frontseitig angeordnet ist.

26. Werkzeug nach Anspruch 25, **dadurch gekennzeichnet, dass** das Platinenauflager (3) aus einem gleitfähigen Material, wie Messing, Rotguss, Ampco, hergestellt ist.

27. Werkzeug nach Anspruch 11, **dadurch gekennzeichnet, dass** das Platinenauflager (3) eine abgerundete Ziehkante (30) zum Tiefziehbereich (5) hin aufweist.

## Claims

1. Method for deforming a hardenable steel sheet (P) that is cut to size in an extrusion press (2, 4) so as to obtain a workpiece (W) which is provided with an essentially U-shaped cross section and an embossing and/or beading in the bottom area (WG) thereof, and for hardening by annealing and then quenching the workpiece (W) in a mold, **characterized in that** the cut steel sheet (P) is introduced into the open extrusion press (2, 4) in a red-hot state and is then retained therein in a supporting manner such that the edge thereof is spaced apart from the lateral faces and the front face of a deep-drawing zone (5) of the matrix (4) so as to be exposed to a deep-drawing force (K), thus the cut steel sheet (P), that is slightly cooled on the edge, first bends in the direction of the matrix (4) because the same is dented by the deep-drawing force (K) applied in the direction of the matrix (4), whereupon the cut steel sheet (P) is pressed into the matrix (4) and the created steel sheet curvature (B) is compressed and embossed, thereafter the workpiece (W) being cooled in the extrusion press (2, 4).

2. Method according to claim 1, **characterized in that** the deep-drawing force (K) is provided by a die (2).

3. Method according to claim 1, **characterized in that** the deep-drawing force (K) is at least temporarily or partially provided by a matrix-sided vacuum (V).

4. Method according to claim 1, **characterized in that** after hardening the workpiece (W) is pressed out from the matrix (4) by an ejector (44), which during the impact of the deep-drawing force (K) is supported on a mounting plate (7) bearing the matrix (4).

5. Method according to claim 2, **characterized in that** the die (2) presses at least one embossing groove (22) over a matching embossing flange (42) of the matrix (4).

6. Method according to claim 2, **characterized in that** during embossing a workpiece border area (WR) is curved from the U-shaped cross-section of the workpiece (W) between a laterally extending die edge (21) and a matrix edge (41) parallel thereto.

7. Method according to claim 1, **characterized in that** the cut steel sheet (P) is pulled forward across a rounded edge (30) of the blank support (3) to the curved mold (P1).

8. Method according to claim 1, **characterized in that** during the drawing-in of the die (2) into the matrix (4) the edge of the cut steel sheet (P) is bended around the blank supports (3) and the red-hot cut steel sheet (P) in the extrusion press (2, 4) is supported there, while border areas of the cut steel sheet (P) are pulled across the supports (3) into the matrix (4).

9. Method according to claim 8, **characterized in that** the blank support (3), with its bearing surface is at an approximately equal distance with respect to a bottom of the deep-drawing zone (5).

10. Method according to claim 1, **characterized in that** the U-shaped cross-section of the tool (2, 4) is shaped with varied largeness, depth and / or profile.

11. Tool for drawing and embossing hardenable steel with a matrix (4) with a deep-drawing zone (5) having roughly U-shaped cross section, and a support for a cut steel sheet (P), which a deep-drawing force (K) presses into the deep-drawing zone (5), in particular for the execution of the method according to claim 1, **characterized in that** for cooling and hardening the inserted red-hot steel sheet (P) the tool (W) is cooled and the deep-drawing zone (5) is surrounded by a blank support (3) spaced apart from the same on the lateral sides and the front side, so that the cut steel sheet (P) bend and dented therein takes approximately the form of the cross section of the deep-drawing zone (5), before touching it and cooling down.

12. Tool according to claim 11, **characterized in that** a die (2) is movably arranged coaxially to the matrix (4) and matching with it, said die providing at least partially the deep-drawing force (K).

13. Tool according to claim 11, **characterized in that** the deep-drawing zone (5) can be connected controllable with a vacuum (V), which at least partially provides the deep-drawing force (K).

14. Tool according to claim 11, **characterized in that** the U-shaped cross-section of the deep-drawing zone (5) is shaped roughly trapezoidal with diverging flanks.

15. Tool according to claim 11, **characterized in that** the die (2) has at least one embossing groove (22) on its lateral and / or front faces and the deep-drawing zone has a respectively matching embossing porter (42).

16. Tool according to claim 11, **characterized in that** the die (2) has at least one holding-down device (9), frontally rounded, which is laterally spaced apart from the blank supports (3) and when the die (2) enters the matrix (4) bends the nearby border area of the cut steel sheet (P) around the blank supports (3), after which it is pulled around these into the matrix (4).

17. Tool according to claim 16, **characterized in that** in each case the blank supports (3) and the holding-down devices (9) are mounted in the tool, where a support of the cut steel sheet (P) is required.

18. Tool according to claim 16, **characterized in that** the blank supports (3) and the holding-down devices (9) are each frontally rounded.

19. Tool according to claim 16, **characterized in that** the blank supports (3) and the holding-down devices (9) are fixed at their position and / or their height to optimize the method according to claim 1.

20. Tool according to claim 19, **characterized in that** the blank supports (3) and / or the holding-down devices (9) are moved with respect to their height, leading or following the downward motion of the die (2).

21. Tool according to claim 16, **characterized in that** the holding-down devices (9, 19A) are arranged next to the blank supports (3) where the tool (2, 4) has laterally tight curvatures.

22. Tool according to claim 16, **characterized in that** the holding-down devices (9, 19B) are arranged at each end of a long tool (2, 4).

23. Tool according to claim 11, **characterized in that** the die (2) has a lateral die edge (21) and the matrix (4) has a parallel matrix edge (41) for pressing a lateral working piece border area (WR).

24. Tool according to claim 11, **characterized in that** an ejector (44) is arranged at the bottom of the deep-drawing zone (5), which has an active connection with a lifting device (8).

25. Tool according to claim 11, **characterized in that** the blank support (3) is arranged in a detachable way in the matrix (4) at the front face.

26. Tool according to claim 25, **characterized in that** the blank support (3) is made of materials with good sliding qualities such as brass, red bronze, Ampco.

27. Tool according to claim 11, **characterized in that** the blank support (3) has a rounded drawing radius (30) in the direction of the deep-drawing zone (5).

## Revendications

1. Méthode pour déformer une coupe de tôle (P) d'acier durcissable dans une presse d'emboutissage (2, 4), fabriquant une pièce usinée (W) avec une section transversale essentiellement en forme de U et le cas échéant avec un embouti et / ou une moulure dans le compartiment de base (WG), et pour durcir et/ou améliorer par trempe et revenu dans un moule,
**caractérisée en ce que** la coupe de tôle (P) portée en rouge est insérée dans la presse d'emboutissage ouverte (2, 4) et y est ensuite tenue espacée vers une zone d'emboutissage (5) de la matrice (4) de manière libre et soutenue aux bords latéraux aussi bien que frontales, contre une force d' emboutissage (K), de telle manière que la coupe de tôle (P), légèrement refroidi aux bords, bosselée par la force d' emboutissage (K) commence de bomber dans la direction de la matrice (4), et ensuite est enfoncée dans la matrice (4) et alors le bombement (B) produit est estampé et cogné, et après la pièce usinée (W) est refroidie dans la presse d'emboutissage (2, 4).

2. Méthode selon la revendication 1, **caractérisée en ce que** la force d'emboutissage (K) est fournie par un poinçon (2).

3. Méthode selon la revendication 1, **caractérisée en ce que** la force d'emboutissage (K) est fournie au moins temporairement ou partiellement par un vacuum (V) du côté de la matrice.

4. Méthode selon la revendication 1, **caractérisée en ce qu'**après le durcissement la pièce usinée (W) est pressée de la matrice (4) par un éjecteur (44), qui au cours de l'action de la force d' emboutissage (K) est appuyé sur une plaque de base (7) portant la matrice (4).

5. Méthode selon la revendication 2, **caractérisée en ce que** le poinçon (2) presse au moins une rainure de matriçage (22) sur une saillie de matriçage (42) correspondante de la matrice (4).

6. Méthode selon la revendication 2, **caractérisée en ce qu'**une zone de bord de la pièce usinée (WR), située entre une bordure de poinçon (21) étendant latéralement et une bordure matrice (41) parallèle à celle-ci, est pliée au cours de la matriçage de la section transversale en forme de U de la pièce usinée (W).

7. Méthode selon la revendication 1, **caractérisée en ce que** la coupe de tôle (P) est tirée en avant à travers un bord arrondi (30) du support de tôle (3) dans la moule bombé (PL).

8. Méthode selon la revendication 1, **caractérisée en ce que** lors de l'insertion du poinçon (2) dans la matrice (4), les bordures de la coupe de tôle (P) sont coudées autour des supports de tôle (3) et la coupe de tôle (P) portée en rouge y obtient un support dans la presse d'emboutissage (2, 4), pendant que les zones bordières de la coupe de tôle (P) sont tirées sur des supports de tôle (3) dans la matrice (4).

9. Méthode selon la revendication 8, **caractérisée en ce que** le support de tôle (3), avec sa surface d'appui est formée avec un espace approximativement égal par rapport au fond de la zone d'emboutissage (5).

10. Méthode selon la revendication 1, **caractérisée en ce que** la section transversale en forme de U de l'outil (2, 4) est formée avec une largeur, profondeur et / ou un profil différents.

11. Outil pour emboutir et cambrer de l'acier durcissable avec une matrice (4) avec une zone d'emboutissage (5), formée approximativement en U dans sa section transversale, et un support pour une coupe de tôle (P), qui une force d' emboutissage (K) presse dans la zone d'emboutissage (5), en particulier pour l'exécution de la méthode selon la revendication 1, **caractérisé en ce que** l'outil (W) est refroidi pour le refroidissement et le durcissement de la coupe de tôle (P ) rouge insérée, et la zone d'emboutissage (5) est entourée d'un support de tôle (3) espacé latéralement et frontalement, de sorte que la coupe de tôle (P) est préformée en obtenant approximativement la forme de la section transversale de la zone d'emboutissage (5) quand elle est débosselée, avant de toucher celle-ci en se refroidant.

12. Outil selon la revendication 11, **caractérisé en ce qu'**un poinçon (2) est arrangé de façon mobile, coaxial à la matrice (4) et correspondant avec elle, qui fournit au moins partiellement la force d' emboutissage (K).

13. Outil selon la revendication 11, **caractérisé en ce que** la zone d'emboutissage (5) peut être connecté de manière contrôlable avec un vacuum (V), qui fournit au moins partiellement la force d' emboutissage (K).

14. Outil selon la revendication 11, **caractérisé en ce que** la section transversale en forme de U de la zone d'emboutissage (5) prend une forme approximativement trapézoïdale à flancs divergents.

15. Outil selon la revendication 11, **caractérisé en ce que** le poinçon (2) comporte au moins une rainure de matriçage (22) sur ses cotés ou sur s front et la zone d'emboutissage comprend une portée de matriçage (42) correspondante.

16. Outil selon la revendication 11, **caractérisé en ce que** le poinçon (2) comporte au moins un serre-flan (9), arrondi sur son front, qui est espacé latéralement des supports de tôle (3) et qui pendant l'insertion du poinçon (2) dans la matrice (4), plie la zone de bord de la coupe de tôle (P) autour des supports de tôle (3), ensuite ladite zone de bord est tirée sur ces supports dans la matrice (4).

17. Outil selon la revendication 16, **caractérisé en ce que** les supports de tôle (3) et les serre-flans (9) sont chacun montés dans l'outil, là où un support de la coupe de tôle (P) est nécessaire.

18. Outil selon la revendication 16, **caractérisé en ce que** les supports de tôle (3) et les serre-flans (9) sont arrondis sur leur front.

19. Outil selon la revendication 16, **caractérisé en ce que** les supports de tôle (3) et les serre-flans (9) sont fixés à leur position et / ou par rapport à leur hauteur pour l'optimisation de la méthode selon la revendication 1.

20. Outil selon la revendication 19, **caractérisé en ce que** les supports de tôle (3) et /ou des serre-flans (9) changent leur hauteur en tête du ou suivant la descente du poinçon (2).

21. Outil selon la revendication 16, **caractérisé en ce que** les serre-flans (9, 19A) sont arrangés avoisinants aux supports de tôle (3) correspondant à l'endroit, où l'outil (2, 4), sur ses cotés, présente des courbures étroites.

22. Outil selon la revendication 16, **caractérisé en ce que** les serre-flans (9, 19B) sont chacun arrangés au bout d'un outil long (2, 4).

23. Outil selon la revendication 11, **caractérisé en ce que** le poinçon (2) comporte une bordure de poinçon latérale (21) et la matrice (4) comporte une bordure de matrice (41) parallèle à celle-ci pour presser une zone de bord de la pièce usinée (WR).

24. Outil selon la revendication 11, **caractérisé en ce qu'**un éjecteur (44) est arrangé au fond de la zone d'emboutissage (5), qui a un raccord actif avec un dispositif de levage (8).

25. Outil selon la revendication 11, **caractérisé en ce que** le support de tôle (3) est arrangé de manière détachable frontalement dans la matrice (4).

26. Outil selon la revendication 25, **caractérisé en ce que** le support de tôle (3) est produit des matériaux avec des bonnes qualités de glissement, comme laiton, bronze rouge, Ampco.

27. Outil selon la revendication 11, **caractérisé en ce que** le support de tôle (3) comporte un bord de matrice arrondi (30) a son coté avoisinant la zone d'emboutissage (5).
